# EUROPEAN PATENT SPECIFICATION

(11) **EP 1 160 402 B1**
(45) Date of publication and mention of the grant of the patent: **29.06.2005**
(21) Application number: 01304268.4
(22) Date of filing: 14.05.2001
(51) Int. Cl.: E05B 65/12

(54) **Power actuator assembly**
Hilfsantriebsanordnung
Ensemble d'actionneur motorisé

(30) Priority: 02.06.2000 GB 0013285
(43) Date of publication of application: 05.12.2001
(73) Proprietor: ArvinMeritor Light Vehicle Systems (UK) Ltd, Birmingham, West Midlands, B30 3BW (GB)
(72) Inventor: Spurr, Nigel, Birmingham, West Midlands B28 0RP (GB)
(74) Representative: Jones, John Bryn

(56) References cited:
- WO-A-01/46546
- DE-A- 19 707 435
- DE-U- 9 304 462
- FR-A- 2 455 155
- FR-A- 2 600 127
- FR-A- 2 705 744
- GB-A- 1 518 335
- US-A- 4 482 265
- US-A- 4 885 954
- US-B1- 6 189 939

## Description

The present invention relates to power actuator assemblies and in particular to power actuator assemblies for use in vehicles.

Power actuator assemblies are known wherein an actuator output member is included in the actuator assembly, there being no means whereby the output member can be adjusted relative to the actuator.

FR-A-2705744 (Automobiles Peugeot et al) discloses an actuator assembly having the features of the preamble of claim 1 and that permits adjustment. The assembly comprises a connecting piece including a recess with a notched face to accommodate a notched end of a rod and a clippable tab for retaining the rod in the recess.

An object of the present invention is to provide an actuator assembly in which an output member can be adjusted relative to the actuator body.

Another object of the present invention is to provide an actuator assembly which is easier to assemble.

Thus according to the present invention there is provided a power actuator assembly including a power actuator body having an output member, a substantially rigid output member extension, and a clip, the clip including formations for engagement with another of the output member and output member extension for securing the output member extension relative to the output member, the clip comprising a first portion including formations for engagement with one side of the output member or output member extension and comprising a second portion including formations for engagement with another side of the output member or output extension and means for securing the first and second portions together when the portions engage the output member or output member extension characterised in that the clip is integral with one of the output member or output member extension and the first and second portion have a pivotal connection therebetween.

According to a further aspect of the present invention there is provided a kit of parts to provide for a power actuator assembly, the kit including a power actuator assembly including a power actuator body having an output member, an output member extension, and a clip, the clip including formations for engagement with another of output member and output member extension for securing the output member extension relative to the output member, the clip comprising a first portion including formations for engagement with one side of the output member or output member extension and comprising a second portion including formations for engagement with another side of the output member or output extension and means for securing the first and second portions together when the portions engage the output member or output member extension characterised in that the clip is integral with one of the output member or output member extension, the first and second portion have a pivotal connection therebetween and in that the kit further includes an alternative output member extension.

According to a further aspect of the present invention there is provided a method of assembling a power actuator assembly including a power actuator body having an output member, a substantially rigid output member extension, and a clip, the clip including formations for engagement with another of the output member and output member extension for securing the output member extension relative to the output member, the clip comprising a first portion including formations for engagement with one side of the output member or output member extension and comprising a second portion including formations for engagement with another side of the output member or output extension and means for securing the first and second portions together when the portions engage the output member or output member extension characterised in that the clip is integral with one of the output member or output member extension and the first and second portion have a pivotal connection therebetween comprising the steps of positioning the output member relative to the output member extension, engaging the formations of the clip with another of the output member and output member extension to secure the output member extension relative to the output member.

The invention will now be described, by way of example only, with reference to the accompanying drawings in which:-
Figure 1 is a side view of an actuator assembly according to the present invention; and
Figure 2 is a partial isometric view of figure 1 showing the actuator assembly in a pre-assembled condition.

With reference to the drawings there is shown an actuator assembly 10 including an actuator body 12 having an output plunger 14.

Body 12 includes mounting feature 16 for mounting the actuator assembly in a vehicle in use.

Output plunger 14 is displaceable in a reciprocating manner in the direction of arrow A by power operation of the actuator.

Output plunger 14 includes a clip 18, which in this case is of a plastics material and is integrally moulded with an end portion 14A of output plunger 14. Clip 18 includes a first portion 20 which is directly integrally moulded with end portion 14A, and a second portion 22 which is connected to first portion 20 by a flexible membrane 24.

First portion 20 includes four lugs 26, pairs of which provide guide slots 28.

First portion 20 also includes a receiving pocket 30 which is generally elongate forming a channel of U-shaped cross-section. In inner surface of the pocket includes formations in the form of an array of grooves 32 with each groove lying in a plane orthogonal to the axis of the channel.

Second portion 22 includes four resilient hooks 34 and guide portions 36.

Second portion 22 further includes a receiving recess 38 of elongate form which includes formations in the form an array of grooves 40 similar to grooves 32.

It should be noted that receiving pocket 30 is deeper than receiving recess 38.

An output member extension 46 is provided in the form of a rod 48 having an attachment feature in the form of a hook portion 50 at one end thereof and an annualarly grooved portion 52 having corresponding formations in the form of an array of teeth 54 at the other end thereof. In use hook portion 50 is assembled to a component to be actuated by the actuator assembly.

An assembly jig 60 (only part shown) is provided to ensure that the rod 48 is assembled into the clip 18 in the correct position as follows.

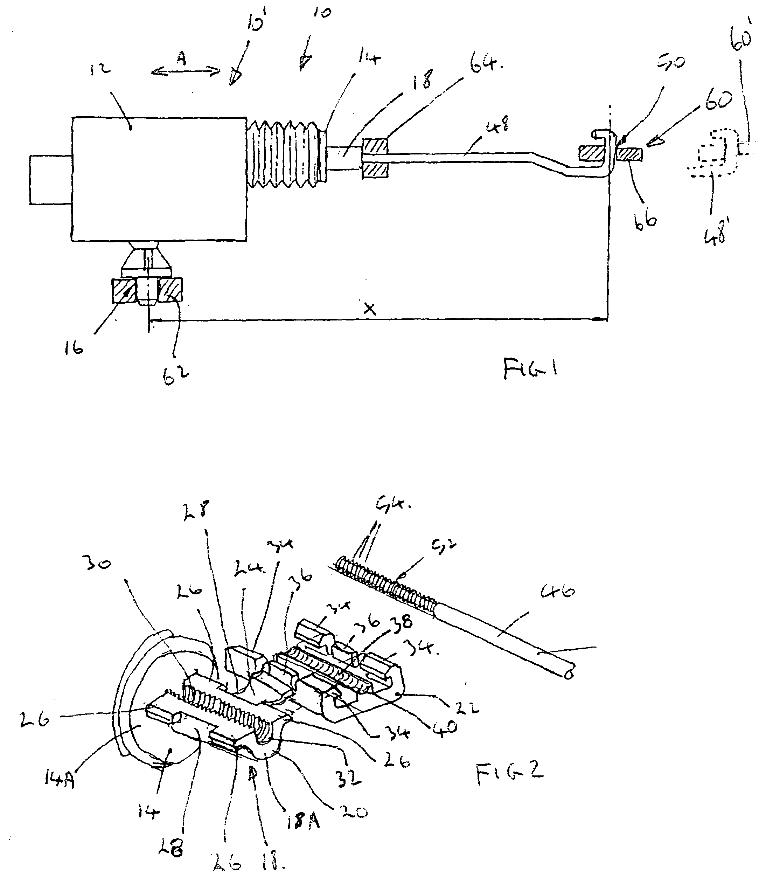

Actuator body 12 is assembled onto a mounting position 62 of the assembly jig via the mounting features 16. The output plunger is moved to a position wherein abutment surface 18A of clip 18 contacts plunger positioning abutment 64 of assembly jig 60. Note that at this stage the clip is in the open position as shown in figure 2.

The hook portion 50 of rod 48 is assembled into a rod positioning abutment 66 of jig 60 and the array of teeth 54 of the annularly grooved portion 52 are assembled into the receiving pocket 30 of the clip and engage with grooves 32.

The second portion 22 of clip 18 is then pivotally moved via flexing of membrane 24 such that guide portions 36 slide in guide slots 28 until such time as resilient hooks 34 snap fit over corresponding lugs 26. At this stage the rod 48 is fixed axially relative to the output plunger 14. The actuator assembly 10 can then be removed from the jig and subsequently assembled onto a vehicle. Note that once the clip has been closed, no adjustment of the rod axially relative to the output member is possible. This can be particularly advantageous when there is a significant time delay between removing the assembly from the jig and assembling it into the vehicle since no inadvertent or accidental adjustment can take place.

It should be noted that by mounting the actuator via its mounting feature 16, and by securing the rod 48 in the jig via its hook portion 50 (which hook portion engages an element to be actuated in use), the tolerances between the mounting features and hook portion can be minimised such that dimension X can be within half a pitch of the array of grooves 32.

In further embodiments a clip could be integral with an output member extension.

The output member or output member extension may be plastically deformable by formations on the clip to provide for corresponding formations on the output member or output member extension.

The formations need not be an array of grooves lying in planes orthogonal to an axis of the rod, for example the end of the rod could be a threaded end, thus allowing for subsequent adjustment following closure of the clip when necessary.

In further embodiments the actuator assembly could provide an output member which pivots about an arc, rather than an output plunger for linear reciprocal movement.

The present invention is particularly useful where common actuator bodies can be used with differing output member extensions to provide for different actuator assemblies. Thus with reference to figure 1 there is shown a further rod 48' which is longer than rod 48. When rod 48' is assembled into jig 60' (only part of which is shown) with actuator body 12 also being assembled into jig 60', it is possible to provide an alternative actuator assembly 10'.

In particular where two jigs and 60 and 60' are provided it is possible to provide each jig with features (not shown) which block the acceptance of an incorrect rod, for example features can be provided on jig 60' which prevent rod 48 being assembled into actuator body 12. Similarly jig 60 can be provided with features (not shown) which block the assembly of rod 48' into actuator body 12. Thus it is possible to provide such additional measures which prevent incorrect assembly of an actuator assembly.

## Claims

1. A power actuator assembly (10) including a power actuator body (12) having an output member (14), a substantially rigid output member extension (46), and a clip (18), the clip (18) including formations (32,40) for engagement with another of the output member (14) and output member extension (46) for securing the output member extension (46) relative to the output member (14), the clip (18) comprising a first portion (20) including formations (32) for engagement with one side of the output member (14) or output member extension (46) and comprising a second portion (22) including formations (40) for engagement with another side of the output member (14) or output member extension (46) and means (26,34) for securing the first and second portions (20,22) together when the portions (20,22) engage the output member (14) or output member extension (46) **characterised in that** the clip (18) is integral with one of the output member (14) or output member extension (46) and the first and second portion (20,22) have a pivotal connection (24) therebetween.

2. A power actuator assembly as defined in Claim 1 in which said another of the output member (14) and output member extension (46) includes corresponding formations (52).

3. A power actuator assembly as defined Claim 1 in which said another of the output member (14) and output member extension (46) is deformable by the formations (32,40) to provide for corresponding formations.

4. A power actuator assembly as defined in Claim 3 in which said another of the output member (14) and output member extension (46) is plastically deformable.

5. A power actuator assembly as defined in any preceding Claim in which the formations provide adjustment between the output member (14) and output member extension (46) following assembly.

6. A power actuator assembly as defined in Claim 5 in which the formations are in the form of one or more helical threads.

7. A power actuator assembly as defined in any one of Claims 1 to 4 in which the formations (32,40,52) do not provide for adjustment between the output member (14) and output member extension (46) following assembly.

8. A power actuator assembly as defined in Claim 7 in which the formations (32,40,52) are at least one substantially continuous groove or ridge (54) in a plane substantially orthogonal to a longitudinal axis of the clip (18), output member (14) and output member extension (46).

9. A power actuator assembly as defined in Claim 8 in which the groove or ridge (54) is annular.

10. A power actuator assembly as defined in any preceding Claim in which a snap fit engagement is (26,34) provided between the first and second portions (20,22) to secure the output member (14) relative to the output member extension (46).

11. A power actuator assembly as defined in any preceding Claim in which the first and second portions (20,22) are provided with co-operating guide surfaces (28,36) to provide for correct alignment of the first and second portions (20,22) prior to securing the output member (14) relative to the output member extension (46).

12. A power actuator assembly as defined in any preceding Claim in which the output member (14) is linearly moveable.

13. A power actuator assembly as defined in any preceding Claim in which the output member is annularly moveable.

14. A power actuator assembly as defined in any preceding Claim in which the output member extension is an elongate rod (48).

15. A kit of parts to provide for a power actuator assembly, the kit including a power actuator assembly (10) including a power actuator body (12) having an output member (14), an output member extension (46), and a clip (18), the clip (18) including formations (32,40) for engagement with another of the output member (14) and output member extension (46) for securing the output member extension (46) relative to the output member (14), the clip (18) comprising a first portion (20) including formations (32) for engagement with one side of the output member (14) or output member extension (46) and comprising a second portion (22) including formations (40) for engagement with another side of the output member (14) or output member extension (46) and means (26, 34) for securing the first and second portions (20,22) together when the portions (20,22) engage the output member (14) or output member extension (46) **characterised in that** the clip (18) is integral with one of the output member (14) or output member extension (46), the first and second portion (20,22) have a pivotal connection (24) therebetween and **in that** the kit further includes an alternative output member extension (48').

16. A method of assembling a power actuator assembly according to any one of Claims 1 to 14 comprising the steps of positioning the output member (14) relative to the output member extension (46), engaging the formations (32,40) of the clip (18) with another of the output member (14) and output member extension (46) to secure the output member extension (46) relative to the output member (14).

17. A method as defined in Claim 16 including the step of providing a jig (60) for positioning the output member (14) relative to the output member extension (46).

18. The method of Claim 17 including the step of providing an attachment feature (16,50) on one of the power actuator body (12) and output member extension (46) and positioning the attachment feature (16,50) in the jig (60).

19. The method of Claim 18 including the step of providing an further attachment feature (16,50) on the other of the actuator and output member extension (46) and positioning said further attachment feature in the jig.

20. The method of Claims 16 to 19 including the step of providing a further output member extension (48') and selecting one of said output member extension (46) and said further output member extension (48') for assembly into the actuator assembly.

21. The method of Claim 20 including the step of providing a further jig (60'), one of said jig (60) and said further jig (60') including blocking features to ensure an incorrect output member extension (46,48') can not be selected and assembled in said jig (60) or further jig (60').

## Patentansprüche

1. Stellmotorbaugruppe (10) mit einem Stellmotorkörper (12), der ein Ausgangselement (14), einen im Wesentlichen starren Ausgangselementfortsatz (46) und einen Clip (18) aufweist, wobei der Clip (18) Gebilde (32, 40) zum Eingriff in das andere von dem Ausgangselement (14) und dem Ausgangselementfortsatz (46) umfasst, um den Ausgangselementfortsatz (46) relativ zu dem Ausgangselement (14) festzuhalten, wobei der Clip (18) einen ersten Abschnitt (20) mit Gebilden (32) zum Eingriff in eine Seite des Ausgangselements (14) oder Ausgangselementfortsatzes (46) und einen zweiten Abschnitt (22) mit Gebilden (40) zum Eingriff in eine weitere Seite des Ausgangselements (14) oder Ausgangselementfortsatzes (46) sowie Mittel (26, 34) umfasst, um den ersten und den zweiten Abschnitt (20, 22) zusammenzuhalten, wenn die Abschnitte (20, 22) an dem Ausgangselement (14) oder Ausgangselementfortsatz (46) angreifen, **dadurch gekennzeichnet, dass** der Clip (18) mit dem Ausgangselement (14) oder dem Ausgangselementfortsatz (46) einstückig ausgebildet ist und der erste und der zweite Abschnitt (20, 22) dazwischen eine Schwenkverbindung (24) haben.

2. Stellmotorbaugruppe nach Anspruch 1, bei der das andere von dem Ausgangselement (14) und dem Ausgangselementfortsatz (46) entsprechende Gebilde (52) aufweist.

3. Stellmotorbaugruppe nach Anspruch 1, bei der das andere von dem Ausgangselement (14) und dem Ausgangselementfortsatz (46) durch die Gebilde (32, 40) verformbar ist, um entsprechende Gebilde zu ermöglichen.

4. Stellmotorbaugruppe nach Anspruch 3, bei der das andere von dem Ausgangselement (14) und dem Ausgangselementfortsatz (46) plastisch verformbar ist.

5. Stellmotorbaugruppe nach einem der vorhergehenden Ansprüche, bei der die Gebilde nach der Montage die Einstellung zwischen dem Ausgangselement (14) und dem Ausgangselementfortsatz (46) ermöglichen.

6. Stellmotorbaugruppe nach Anspruch 5, bei der die Gebilde die Form eines oder mehrerer Schraubengewinde haben.

7. Stellmotorbaugruppe nach einem der Ansprüche 1 bis 4, bei der die Gebilde (32, 40, 52) nach der Montage keine Einstellung zwischen dem Ausgangselement (14) und dem Ausgangselementfortsatz (46) ermöglichen.

8. Stellmotorbaugruppe nach Anspruch 7, bei der die Gebilde (32, 40, 52) mindestens eine im Wesentlichen durchgehende Nut oder Rippe (54) in einer zu einer Längsachse des Clips (18), des Ausgangselements (14) und des Ausgangselementfortsatzes (46) im Wesentlichen orthogonalen Ebene sind.

9. Stellmotorbaugruppe nach Anspruch 8, bei der die Nut oder Rippe (54) ringförmig ist.

10. Stellmotorbaugruppe nach einem der vorhergehenden Ansprüche, bei der zwischen dem ersten und dem zweiten Abschnitt (20, 22) eine Schnappverbindung (26, 34) vorgesehen ist, um das Ausgangselement (14) relativ zu dem Ausgangselementfortsatz festzuhalten.

11. Stellmotorbaugruppe nach einem der vorhergehenden Ansprüche, bei der der erste und der zweite Abschnitt (20, 22) mit zusammenwirkenden Führungsflächen (28, 36) versehen sind, um die korrekte Ausrichtung des ersten und des zweiten Abschnitts (20, 22) zu ermöglichen, bevor das Ausgangselement (14) relativ zu dem Ausgangselementfortsatz (46) festgehalten wird.

12. Stellmotorbaugruppe nach einem der vorhergehenden Ansprüche, bei der das Ausgangselement (14) linear bewegbar ist.

13. Stellmotorbaugruppe nach einem der vorhergehenden Ansprüche, bei der das Ausgangselement ringförmig bewegbar ist.

14. Stellmotorbaugruppe nach einem der vorhergehenden Ansprüche, bei der der Ausgangselementfortsatz eine lang gestreckte Stange (48) ist.

15. Bausatz von Teilen, die eine Stellmotorbaugruppe ergeben, wobei der Bausatz eine Stellmotorbaugruppe (10) mit einem Stellmotorkörper (12) umfasst, der ein Ausgangselement (14), einen Ausgangselementfortsatz (46) und einen Clip (18) aufweist, wobei der Clip (18) Gebilde (32, 40) zum Eingriff in das zweite von dem Ausgangselement (14) und dem Ausgangselementfortsatz (46) umfasst, um den Ausgangselementfortsatz (46) relativ zu dem Ausgangselement (14) festzuhalten, wobei der Clip (18) einen ersten Abschnitt (20) mit Gebilden (32) zum Eingriff in eine Seite des Ausgangselements (14) oder Ausgangselementfortsatzes (46) und einen zweiten Abschnitt (22) mit Gebilden (40) zum Eingriff in eine andere Seite des Ausgangselements (14) oder Ausgangselementfortsatzes (46) sowie Mittel (26, 34) umfasst, um den ersten und den zweiten Abschnitt (20, 22) zusammenzuhalten, wenn die Abschnitte (20, 22) an dem Ausgangselement (14) oder Ausgangselementfortsatz (46) angreifen, **dadurch gekennzeichnet, dass** der Clip (18) mit einem von dem Ausgangselement (14) oder Ausgangselementfortsatz (46) einstückig ausgebildet ist, wobei der erste und der zweite Abschnitt (20, 22) dazwischen eine Schwenkverbindung (24) aufweisen, und dass der Bausatz ferner einen alternativen Ausgangselementfortsatz (48') umfasst.

16. Verfahren zum Zusammenbauen einer Stellmotorbaugruppe nach einem der Ansprüche 1 bis 14 mit den folgenden Schritten: das Ausgangselement (14) wird relativ zu dem Ausgangselementfortsatz (46) positioniert; die Gebilde (32, 46) des Clips (18) werden mit dem anderen von dem Ausgangselement (14) und dem Ausgangselementfortsatz (46) in Eingriff gebracht, um den Ausgangselementfortsatz (46) relativ zu dem Ausgangselement festzuhalten.

17. Verfahren nach Anspruch 16 mit dem Schritt des Bereitstellens einer Aufspannvorrichtung (60) zum Positionieren des Ausgangselements (14) relativ zu dem Ausgangselementfortsatz (46).

18. Verfahren nach Anspruch 17 mit dem Schritt des Bereitstellens einer Befestigungsstruktur (16, 50) an dem Stellmotorkörper (12) oder dem Ausgangselementfortsatz (46) und dem Schritt des Positionierens der Befestigungsstruktur (16, 50) in der Aufspannvorrichtung (60).

19. Verfahren nach Anspruch 18 mit dem Schritt des Bereitstellens einer weiteren Befestigungsstruktur (16, 50) an dem anderen von dem Stellmotor und dem Ausgangselementfortsatz (46) und dem Schritt des Positionierens der weiteren Befestigungsstruktur in der Aufspannvorrichtung.

20. Verfahren nach Anspruch 16 bis 19 mit dem Schritt des Bereitstellens eines weiteren Ausgangselementfortsatzes (48') und des Auswählens eines von dem Ausgangselementfortsatz (46) und dem weiteren Ausgangselementfortsatz (48') zum Einbau in die Stellmotorbaugruppe.

21. Verfahren nach Anspruch 20 mit dem Schritt des Bereitstellens einer weiteren Aufspannvorrichtung (60'), wobei die Aufspannvorrichtung (60) oder die weitere Aufspannvorrichtung (60') Sperrstrukturen aufweist, um sicherzustellen, dass kein falscher Ausgangselementfortsatz (46, 46') ausgewählt und in die Aufspannvorrichtung (60) oder die weitere Aufspannvorrichtung (60') eingebaut werden kann.

## Revendications

1. Un ensemble (10) actionneur motorisé comprenant un corps (12) actionneur motorisé muni d'un organe de sortie (14), d'un prolongement (46) sensiblement rigide de l'organe de sortie, et d'une pince (18), la pince (18) comprenant des structures de forme (32, 40) destinées à venir en contact avec un autre parmi l'organe de sortie (14) et le prolongement (46) de l'organe de sortie pour fixer le prolongement (46) de l'organe de sortie par rapport à l'organe de sortie (14), la pince (18) comprenant une première partie (20) comprenant des structures de forme (32) pour venir en contact avec une face de l'organe de sortie (14) ou du prolongement (46) de l'organe de sortie et une deuxième partie (22) comprenant des structures de forme (40) pour venir en contact avec une autre face de l'organe de sortie (14) ou du prolongement (46) de l'organe de sortie et des moyens (26, 34) pour fixer ensemble les première et deuxième parties (20, 22) lorsque ces parties (20, 22) viennent en contact avec l'organe de sortie (14) ou avec le prolongement (46) de l'organe de sortie, **caractérisé en ce que** la pince (18) est monobloc avec l'un parmi l'organe de sortie (14) ou le prolongement (46) de l'organe de sortie et **en ce que** les première et deuxième parties (20, 22) comportent entre elles une liaison pivotante (24).

2. Un ensemble actionneur motorisé selon la revendication 1, dans lequel ledit autre parmi l'organe de sortie (14) et le prolongement (46) de l'organe de sortie comprend des structures de forme (52) correspondantes.

3. Un ensemble actionneur motorisé selon la revendication 1, dans lequel ledit autre parmi l'organe de sortie (14) et le prolongement (46) de l'organe de sortie est déformable par les structures de forme (32, 40) pour obtenir des structures de forme correspondantes.

4. Un ensemble actionneur motorisé selon la revendication 3, dans lequel ledit autre parmi l'organe de sortie (14) et le prolongement (46) de l'organe de sortie est déformable plastiquement.

5. Un ensemble actionneur motorisé selon l'une quelconque des revendications précédentes, dans lequel les structures de forme assurent l'ajustement entre l'organe de sortie (14) et le prolongement (46) de l'organe de sortie après l'assemblage.

6. Un ensemble actionneur motorisé selon la revendication 5 dans lequel les structures de forme sont sous la forme d'un ou plusieurs filets hélicoïdaux.

7. Un ensemble actionneur motorisé selon l'une quelconque des revendications 1 à 4, dans lequel les structures de forme (32, 40, 52) n'assurent pas l'ajustement entre l'organe de sortie (14) et le prolongement (46) de l'organe de sortie après l'assemblage.

8. Un ensemble actionneur motorisé selon la revendication 7, dans lequel les structures de forme (32, 40, 52) constituent au moins une rainure ou nervure (54) sensiblement continue dans un plan sensiblement orthogonal à un axe longitudinal de la pince (18), de l'organe de sortie (14) et du prolongement (46) de l'organe de sortie.

9. Un ensemble actionneur motorisé selon la revendication 8, dans lequel la rainure ou nervure (54) est annulaire.

10. Un ensemble actionneur motorisé selon l'une quelconque des revendications précédentes, dans lequel un engagement à encliquetage (26, 34) est prévu entre les première et deuxième parties (20, 22) pour fixer l'organe de sortie (14) par rapport au prolongement (46) de l'organe de sortie.

11. Un ensemble actionneur motorisé selon l'une quelconque des revendications précédentes, dans lequel les première et deuxième parties (20, 22) sont munies de surfaces de guidage coopérantes (28, 36) pour assurer l'alignement correct des première et deuxième parties (20, 22) avant de fixer l'organe de sortie (14) par rapport au prolongement (46) de l'organe de sortie.

12. Un ensemble actionneur motorisé selon l'une quelconque des revendications précédentes, dans lequel l'organe de sortie (14) est mobile de façon linéaire.

13. Un ensemble actionneur motorisé selon l'une quelconque des revendications précédentes, dans lequel l'organe de sortie est mobile de façon annulaire.

14. Un ensemble actionneur motorisé selon l'une quelconque des revendications précédentes, dans lequel le prolongement de l'organe de sortie est une tige allongée (48).

15. Un lot ou jeu de pièces destinées à un ensemble actionneur motorisé, le lot comprenant un ensemble (10) actionneur motorisé comprenant un corps (12) actionneur motorisé muni d'un organe de sortie (14), d'un prolongement (46) de l'organe de sortie, et d'une pince (18), la pince (18) comprenant des structures de forme (32, 40) destinées à venir en contact avec un autre parmi l'organe de sortie (14) et le prolongement (46) de l'organe de sortie pour fixer le prolongement (46) de l'organe de sortie par rapport à l'organe de sortie (14), la pince (18) comprenant une première partie (20) comprenant des structures de forme (32) pour venir en contact avec une face de l'organe de sortie (14) ou du prolongement (46) de l'organe de sortie et comprenant une deuxième partie (22) comprenant des structures de forme (40) pour venir en contact avec une autre face de l'organe de sortie (14) ou du prolongement (46) de l'organe de sortie et des moyens (26, 34) pour fixer ensemble les première et deuxième parties (20, 22) lorsque ces parties (20, 22) viennent en contact avec l'organe de sortie (14) ou le prolongement (46) de l'organe de sortie, **caractérisé en ce que** la pince (18) est monobloc avec l'un parmi l'organe de sortie (14) ou le prolongement (46) de l'organe de sortie, **en ce que** la première et la deuxième parties (20, 22) comportent entre elles une liaison pivotante (24) et **en ce que** le lot comprend en outre un prolongement en variante (48') de l'organe de sortie.

16. Un procédé d'assemblage d'un ensemble actionneur motorisé selon l'une quelconque des revendications 1 à 14, comprenant les étapes consistant à positionner l'organe de sortie (14) par rapport au prolongement (46) de l'organe de sortie, à mettre en contact les structures de forme (32, 40) de la pince (18) avec un autre parmi l'organe de sortie (14) et le prolongement (46) de l'organe de sortie pour fixer le prolongement (46) de l'organe de sortie par rapport à l'organe de sortie (14).

17. Un procédé selon la revendication 16, comprenant l'étape consistant à prévoir un dispositif de serrage (60) pour positionner l'organe de sortie (14) par rapport au prolongement (46) de l'organe de sortie.

18. Le procédé selon la revendication 17, comprenant l'étape consistant à prévoir une structure de fixation (16, 50) sur l'un parmi le corps (12) actionneur motorisé et le prolongement (46) de l'organe de sortie et à positionner la structure de fixation (16, 50) dans le dispositif de serrage (60).

19. Le procédé selon la revendication 18, comprenant l'étape consistant à prévoir une autre structure de fixation (16, 50) sur l'autre parmi l'organe d'actionnement et le prolongement (46) de l'organe d'actionnement et à positionner ladite autre structure de fixation dans le dispositif de serrage.

20. Le procédé selon les revendications 16 à 19, comprenant l'étape consistant à prévoir un autre prolongement (48') de l'organe de sortie et à sélectionner l'un parmi ledit prolongement (46) de l'organe de sortie et ledit autre prolongement (48') de l'organe de sortie pour l'assemblage dans l'ensemble actionneur.

21. Le procédé selon la revendication 20, comprenant l'étape consistant à prévoir un autre dispositif de serrage (60'), l'un parmi ledit dispositif de serrage (60) et ledit autre dispositif de serrage (60') comprenant des structures de blocage pour assurer qu'un prolongement (46, 46') de l'organe de sortie incorrect ne puisse pas être sélectionné et assemblé dans ledit dispositif de serrage (60) ou ledit autre dispositif de serrage (60').
